# EUROPÄISCHE PATENTANMELDUNG

(11) **EP 4 459 710 A1**
(43) Veröffentlichungstag der Anmeldung: **06.11.2024**
(21) Anmeldenummer: 23171092.2
(22) Anmeldetag: 02.05.2023
(51) Int. Cl.: H01M 4/36

(54) **VERFAHREN ZUR HERSTELLUNG EINER LITHIUMHALTIGEN ELEKTRODE UND ELEKTROCHEMISCHE ZELLE**

(71) Anmelder: Siemens Aktiengesellschaft, 80333 München (DE)
(72) Erfinder: Jensen, Jens Dahl, 14050 Berlin (DE); Krüger, Ursus, 14089 Berlin (DE); Winkler, Gabriele, 13587 Berlin (DE)
(74) Vertreter: Siemens Patent Attorneys

(57) **Zusammenfassung**

Die Erfindung betrifft ein Verfahren zur Herstellung einer lithiumhaltigen Elektrode (4) für einen Lithium-Ionen haltigen Akkumulator umfassend folgende Schritte:
- Herstellen einer Metallfolie (6),
- Beschichten einer Oberfläche (26) der Metallfolie (6)mit einer Grafit-Schicht (28),
- Einbringen der mit der Grafit-Schicht (28) versehenen Metallfolie (6) in eine elektrochemischen Zelle (2) als erste Elektrode (8) die als Kathode (10) dient,
- Einbringen einer zweiten, lithiumhaltigen Elektrode (12) in die Zelle (2), die als Anode (14) dient,
- wobei in die zweite lithiumhaltige Elektrode (12) Lithiumverbindungen (30) eingebracht werden, die aus thermisch zersetzen Elektrodenmaterial eines Lithium-Ionen Akkumulators stammen,
- Einbringen eines nichtwässrigen Elektrolyten (16) in die elektrochemische Zelle (2),
- Verschließen der elektrochemischen Zelle (2) unter inerten Bedingungen,
- Anlegen von elektrischem Strom an die Elektroden (8), (12) der elektrochemischen Zelle (2), so dass Lithiumionen (18) von der lithiumhaltigen Anode (14) durch den nicht wässrigen Elektrolyten (16) zur Kathode (10) in Form der mit der Grafit-Schicht (28) versehenen Metallfolie (6) wandern und
- die mit der Grafit-Schicht (28) versehene Oberfläche (26) der Metallfolie (6) zu Lithiumionen interkaliert wird.

## Beschreibung

Die Erfindung betrifft ein Verfahren zur Herstellung einer lithiumhaltigen Elektrode nach Patentanspruch 1 sowie eine elektrochemische Zelle nach Patentanspruch 13.

Die Rückgewinnung von wertvollen Metallen wie Nickel, Cobalt und Lithium aus Lithium-Ionen-Akkus erfolgt nach Aufbereitung der Zellen, also nach einer elektrischen Sicherheitsentladung, eine Deaktivierung von verbleibendem Lithiummetall und Verdampfen der Elektrolyten durch einen pyro- und hydrometallurgischen Prozess. Bei dem pyrometallurgischen Prozess fallen neben den Cobalt-Nickel-Kupfer-Legierungen auch lithiumhaltige Schlacke an. Aus dieser lithiumhaltigen Schlacke soll das darin enthaltene Lithium recycelt werden.

Nach dem Stand der Technik wird dieses Lithium durch hydrometallurgische Prozesse aus der Schlacke gewonnen. Die abgeschreckte Schlacke wird mittels Stabmühlen zerkleinert und anschließend über eine Magnetscheibe gegeben, um in der Schlacke eingeschlossene ferromagnetische Legierungsbestandteile wie Nickel und Cobalt zu entfernen. Danach wird die Schlacke mit Schwefelsäure ausgelaugt. Dabei gehen die Lithium-Ionen in Lösung und die verbleibenden Feststoffe, die Gips und Silikate umfassen, werden durch Filtration abgetrennt. Zur Verhinderung eines ungewollten Ausscheidens von Lithiumcarbonat bei nachfolgenden Reinigungsschritten wird das Filtrat bis zur Unterschreitung der Löslichkeitsgrenze von Lithiumcarbonat verdünnt. Das verdünnte Filtrat wird durch Zugabe von Calciumoxid auf einen pH-Wert von 7 eingestellt, um Verunreinigungen, wie Aluminium, Magnesium, Eisen, Mangan, Silicium und Sulfat zu entfernen. Bei diesem pH-Wert fallen Aluminium, Eisen und Silicium sowie einige Schwermetalle als Hydroxide aus. Ein Teil des Sulfates bildet mit dem Calciumoxid schwer lösliches Calciumsulfat (Gips). Nach einer Fest/Flüssig-Trennung wird der pH-Wert durch eine weitere Zugabe von Calciumoxid auf 12 angehoben. Bei diesem pH-Wert werden Magnesium sowie noch weitere Metalle, die sich als Hydroxide oder Sulfatreste in der Lösung befinden, vollständig ausgefällt. Nach einer weiteren Fest/Flüssig-Trennung wird überschüssiges Calcium durch Zugabe von Natriumcarbonat als Kalk ausgefällt und durch Filtration von der Lösung getrennt. Die Lösung wird durch Verdampfen des Wassers stark eingeengt und das Lithium durch Zugabe von Natriumcarbonat bei 100°C als Lithiumcarbonat gefällt. Das abgetrennte Lithiumcarbonat wird mit Ethanol gewaschen, da Lithiumcarbonat im Gegensatz zu Wasser in Ethanol unlöslich ist. Die Reinheit dieses Rohcarbonats beträgt ca. 98 % und bedarf für einen erneuten Einsatz in Batterien einer wiederholten Raffination. Die Gesamtausbringung von Lithium, also die Ausbeute aus der Schlacke, beträgt mit dieser Methode nach dem Stand der Technik ca. 65 %. Diese geringe Ausbeute ist darin begründet, da ein Teil des Lithiums bei der Fällung der Verunreinigungen mit Calciumoxid in die Metallmischoxide mit Aluminium, Magnesium, Eisen oder Mangan eingebunden wird. Dieses Lithium ist chemisch so fest eingebunden, dass es mittels eines Solvent-Extraktions-Verfahrens aus der Ausgangslösung abgetrennt werden müsste, um die Ausbringung noch signifikant zu erhöhen.

Dieses beschriebene Verfahren nach dem Stand der Technik zeigt den sehr hohen nasschemischen Aufwand, der sowohl ökonomisch als auch ökologisch wenig rentabel ist. Die Aufgabe der Erfindung besteht daher darin, ein Verfahren und eine elektrochemische Zelle bereitzustellen, die zur Wiederverwertung von Lithium dient, wobei hiermit eine höhere Ausbeute als im Stand der Technik erreicht wird und gleichzeitig eine Wiederverwertung des zurückgewonnenen Lithiums in einer neuen Elektrode ermöglicht wird.

Die Lösung der Aufgabe besteht in einem Verfahren zur Herstellung einer lithiumhaltigen Elektrode mit den Merkmalen des Patentanspruchs 1 sowie in einer elektrochemischen Zelle mit den Merkmalen des Patentanspruchs 13.

Das Verfahren zur Herstellung einer lithiumhaltigen Elektrode für einen Lithiumionen haltigen Akkumulator nach Patentanspruch 1 umfasst dabei folgende Schritte:
- Herstellen einer Metallfolie,
- Beschichten einer Oberfläche der Metallfolie mit einer Grafit-Schicht,
- Einbringen der mit der Grafit-Schicht versehenen Metallfolie in eine elektrochemische Zelle als erste Elektrode, die als Kathode dient,
- Einbringen einer zweiten lithiumhaltigen Elektrode in die Zelle, die als Anode dient,
- wobei in die zweite lithiumhaltige Elektroden Lithium-Verbindungen eingebracht sind, die aus zersetzten (insbesondere thermisch zersetzten) Elektrodenmaterial eines Lithium-Ionen-Akkumulators stammen,
- Einbringung eines nicht wässrigen Elektrolyten in die elektrochemische Zelle,
- Verschließen der elektrochemischen Zelle unter inerten Bedingungen,
- Anlegen von elektrischem Strom an die Elektroden der elektrochemischen Zelle, sodass Lithium-Ionen von der lithiumhaltigen Anode durch den nicht wässrigen Elektrolyten zur Kathode in Form der Metallfolie mit der Grafitschicht wandern und
   - - die Grafit-Schicht der Metallfolie mit Lithium-Ionen interkaliert wird.

Die so beschriebene Erfindung unterscheidet sich vom Stand der Technik elementar darin, dass die üblicherweise aus einer thermischen Zersetzung von Akkumulatoren gewonnene Schlacke, die Lithiumverbindungen enthält, nicht nasschemisch aufgeschlossen wird, sondern wieder erneut in eine Elektrode und in eine elektrochemische Zelle implementiert wird. Von einer herkömmlichen elektrochemischen Zelle und einem herkömmlichen Lithium-Ionen-Akku unterscheidet sich das Verfahren wiederum darin, dass aus dieser genannten Elektrode mit der Lithium-schlacke die Lithiumionen über einen Elektrolyten zur Kathode wandern und in eine speziell dafür vorgesehene Schicht, nämlich in einer Grafit-Schicht interkaliert werden.

Unter Interkalation versteht man die Einlagerung von Molekülen oder Ionen (gegebenenfalls auch Atomen) in chemische Verbindungen, wobei diese ihre Struktur während des Einlagerungsprozesses nicht wesentlich verändern. Dabei positionieren sich in diesem speziellen Fall die Li-Ionen zwischen den einzelnen Graphen-Schichten des Grafits, da zwischen den Graphen-Schichten nur die schwachen Van- der- Waals Kräfte für Einlagerung (Interkalation) überwunden werden müssen.

Ferner unterscheidet sich das beschriebene Verfahren auch noch darin vom Stand der Technik, dass die Kathode in dieser elektrochemischen Zelle bzw. in diesem durchgeführten Verfahren so ausgestaltet ist, dass durch elektrisch leitfähige Metallfolie die mit der Grafit enthaltenden Schicht versehen ist, in die die Lithiumionen interkaliert sind, während des Verfahrens wiederum eine neue Elektrode entstanden ist. Diese neue Elektrode ist bereits von ihrer Strukturierung der Oberfläche und ihrer Oberflächenbeschichtung als Elektrode für einen neuen Lithium-Ionen-Akku in diesen Fall beispielsweise in Form einer Anode ausgestaltet (Bei einem Akkumulator (Batterie) wird die positiv geladene Elektrode beim Entladungsvorgang als Katode und die negativ geladene Elektrode als Anode bezeichnet)

Das beschriebene Verfahren bietet nicht nur eine technisch wenig aufwändige und ökonomische Art, die lithiumhaltige Schlacke, die bei der Zersetzung insbesondere der thermischen Zersetzung von alten Akkus anfällt, wieder zu verwerten, sondern das beschriebene Verfahren liefert gleichzeitig ein Herstellungsverfahren für eine komplett neue, direkt wieder einsetzbare Elektrode für einen lithiumhaltigen Akkumulator.

In einer vorteilhaften Ausgestaltungsform der Erfindung ist die Metallfolie eine Kupferfolie. Kupfer weist eine sehr hohe elektrische Leitfähigkeit auf und ist somit gut als Elektrodenmaterial geeignet. Ferner ist es verhältnismäßig günstig und technisch gut handhabbar. Grundsätzlich sind auch andere gut leitfähige Metalle wie Silber, Gold oder Aluminium als Material für die Metallfolie geeignet.

Insbesondere wird zur Herstellung der Kupferfolie elektrolytisch gereinigtes Kupfer verwendet, das wiederum eine Reinheit von mindestens 99,9%, besonders bevorzugt von 99,99 % aufweist. Die elektrische Leitfähigkeit des Kupfers steigt mit seiner Reinheit.

Für das verwendete Grafit ist es ebenfalls zweckmäßig ein möglichst reines und von der Kristallstruktur möglichst fehlerfreies Material zu verwenden. Daher wird bevorzugt ein synthetisch hergestelltes Grafit herangezogen.

Ferner wird das Grafit, um gute Beschichtungseigenschaften zu erhalten, mit einem Bindemittel versehen und wird in dieser Mischung bevorzugt nasschemisch auf die Metallfolie 6 aufgetragen. Als Bindemittel wird bevorzugt Polyacrylsäure (PAA), acrylbasierte Copolymere (ACM), Styrene- Butadiene Rubber (SPR) und/oder Carboxymethyl-Cellulose herangezogen. Zudem wird die Mischung aus Grafit und Bindemittel zur Herstellung der Grafit-Schicht bevorzugt mit einem Leitadditiv, insbesondere mit Ruß versehen.

Der nicht wässrige Elektrolyt umfasst bevorzugt Ethylencarbonat, Propylencarbonat oder Dimethylcarbonat, Acetonitril oder eine ionische Flüssigkeit. Besonders bevorzugt ist dabei das Propylencarbonat, da es günstig herzustellen ist und problemlos betrieben werden kann. Ionische Flüssigkeiten sind dabei Salze, deren Schmelztemperatur insbesondere weniger als 100°C beträgt. Wie alle Salze umfassen sie dabei Anionen und Kationen. Durch deren Variation können die physikalisch chemischen Eigenschaften einer ionischen Flüssigkeit in weiten Grenzen variiert und auf die technischen Anforderungen hin optimiert werden. Dabei können typische Kationen z. B. Imidazolium oder Pyridinium, Ammonium und/oder Phosphonium sein. Als Anionen kommen Halogenide und schwach koordinierende Ionen wie Tetrafluoroborate oder Hexafluorophosphate aber auch Trifluoracetate und Triflate und Tosylate in Frage.

In einer vorteilhaften Ausgestaltungsform der Erfindung weist das Lithium der Lithiumverbindung in der zweiten Elektrode Lithium-Calcium-Silikate und/oder Lithium-Magnesium-Silikate und/oder Lithium-Mangan-Oxide und/oder Lithium-Cobalt-Oxide und/oder Lithium-Nickel-Oxide auf. Dies sind typischerweise Verbindungen, die bei der thermischen Zersetzung von Lithium-Ionen-Akkus in der Schlacke bzw. der Asche, die dabei entsteht, enthalten sind.

Der Betrieb des Verfahrens und der Betrieb der elektrochemischen Zelle verläuft unter inerten Bedingungen. Als Inertgas ist dabei insbesondere Argon geeignet. Stickstoff würde eine Reaktion mit den Lithium-Ionen im nicht wässrigen Elektrolyt eingehen. Eine Vakuumatmosphäre ist aufgrund des hohen Dampfdruckes der verwendeten Materialien unter Vakuumbedingungen ebenfalls nicht effizient.

Ein weiterer Bestandteil der Erfindung ist eine elektrochemische Zelle zur Herstellung einer Elektrode eines Lithium-Akkumulators. Diese umfasst eine Anode mit einer Lithiumverbindung, die aus einer bevorzugt thermischen Zersetzung von gebrauchten Lithium-Akkumulatoren stammen und eine Katode, die eine Metallfolie umfasst, die auf ihre Oberfläche mit einer Grafit-Schicht versehen ist und wobei die Anode und die Katode durch einen nicht wässrigen Elektrolyten voneinander getrennt sind.

Die Vorteile gegenüber dem Stand der Technik, die diese elektrochemische Zelle aufweist, sind bereits bezüglich des erfindungsgemäßen Verfahrens erläutert worden. Diese sind zum einen die technisch unaufwändige, direkte Wiederverwertung von lithiumhaltigen Verbindungen aus der bevorzugt thermischen Zersetzung von Alt-Akkumulatoren bei gleichzeitiger Herstellung einer neuen Katode eines Lithium-Akkumulators.

Besonders vorteilhaft ist diese elektrochemische Zelle dann ausgestaltet, wenn mehrere Paare von parallel geschalteten Anoden und Kathoden vorliegen. Auf diese Weise kann ein Upscaling für die Herstellung von Anoden erfolgen und Lithium-schlacke aus dem Rezyklat von Alt-Akkumulatoren großtechnisch wieder verwertet werden.

Für die Herstellung der zweiten Elektrode, der Anode der elektrochemischen Zelle, ist es zweckmäßig, wenn die LithiumVerbindung, also die Schlacke aus der thermischen Zersetzung alter Akkumulatoren mit einem leitfähigen Material, insbesondere mit Kohlenstoffpartikeln vermischt wird und dann verpresst wird. Dabei kommen insbesondere bevorzugt poröse Kohlenstoffpartikel zum Einsatz. Eine derartige gepresste Elektrode aus Lithium-Verbindungen und Kohlenstoffpartikel ist besonders gut im Einsatz der beschriebenen elektrochemischen Zelle geeignet.

Weitere Ausgestaltungsformen und weitere Merkmale werden anhand der folgenden Figuren näher erläutert. Merkmale mit derselben Bezeichnung aber in unterschiedlicher Ausgestaltungsform werden dabei mit demselben Bezugszeichen versehen. Bei den Darstellungen der folgenden Figuren handelt es sich um rein schematische Darstellungen, die keine Einschränkung des Schutzbereiches darstellen.

Dabei zeigen:
- Figur 1: eine elektrochemische Zelle zur Herstellung einer lithiumhaltigen Elektrode und ein entsprechendes Verfahren dazu,
- Figur 2: eine Upscaling-Version der elektrochemischen Zelle nach Figur 1,
- Figur 3: eine schematische Darstellung der Elektroden aus Figur 1 zur Erläuterung der Mikrostruktur.
- Figur 4: vergrößerter Ausschnitt IV aus Figur 3 zur Erläute-rung der Mikrostruktur.

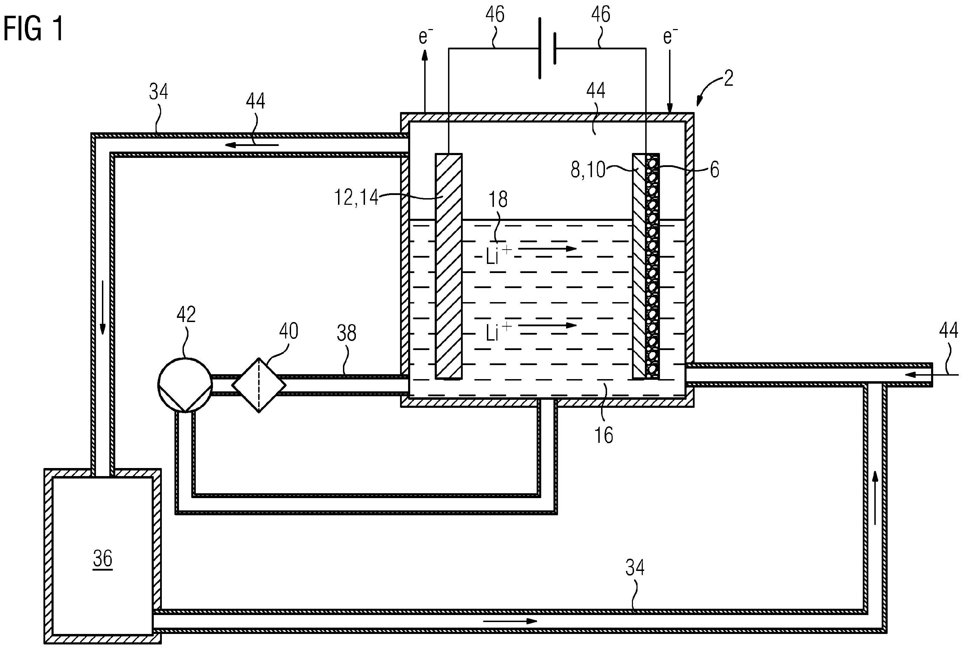

In Figur 1 ist schematisch eine elektrochemische Zelle 2 und ein Verfahren zum Betrieb dieser Zelle 2 beschrieben. Die elektrochemische Zelle 2 umfasst dabei eine erste Elektrode 8, die als Katode 10 ausgestaltet ist. Zum anderen umfasst die Zelle 2 eine zweite, lithiumhaltige Elektrode 12, die als Anode 14 ausgestaltet ist. Beide Elektroden 8, 12 sind in einen nicht wässrigen, flüssigen Elektrolyten 16 getaucht, wobei beim Anlegen eines elektrischen Stroms über Kontaktierungen 46 Lithiumionen 18, die durch das Li⁺ gekennzeichnet sind, von der Anode 14 zur Katode 10 in der Zelle 2 wandern. Ferner ist die elektrochemische Zelle 2 unter Inertgas 44, in diesem Fall Argon, betrieben, wobei das Inertgas 44 aus der Zelle 2 abgeleitet wird und in einem Inertgas-Kreislauf 44, dort in einem Gasreinigungssystem 36 aufbereitet wird und der Zelle 2 erneut zugeführt wird. Ferner wird auch der Elektrolyt 16 aufbereitet, wozu ein Elektrolyt-Umwälzsystem 38 dient, in dem eine Pumpe 40 und ein Filter 42 enthalten sind. Als Elektrolyt 16 wir in diesem Fall eine Propylencarbonat verwendet.

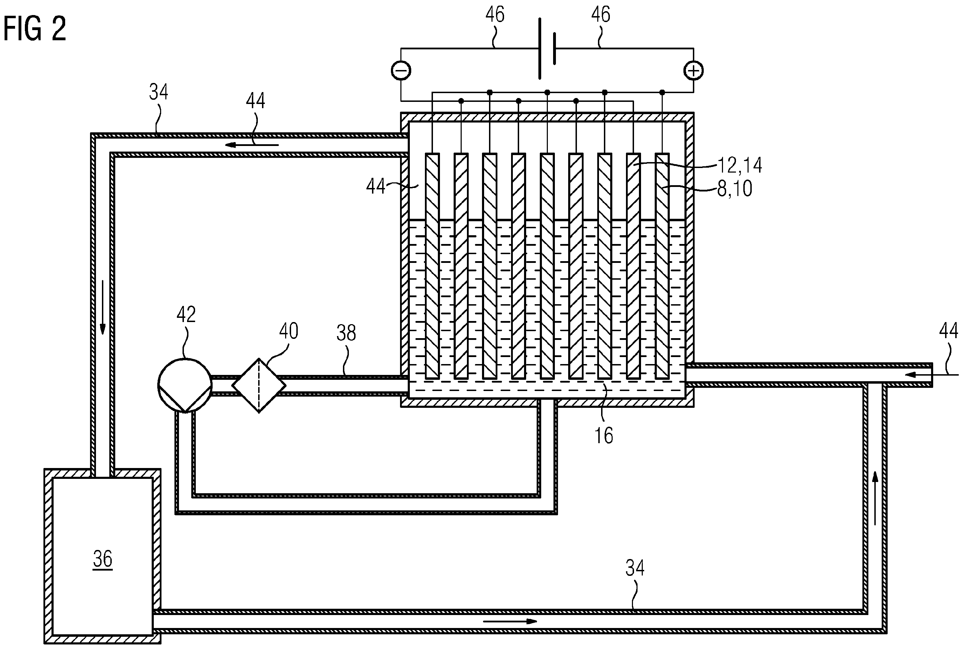

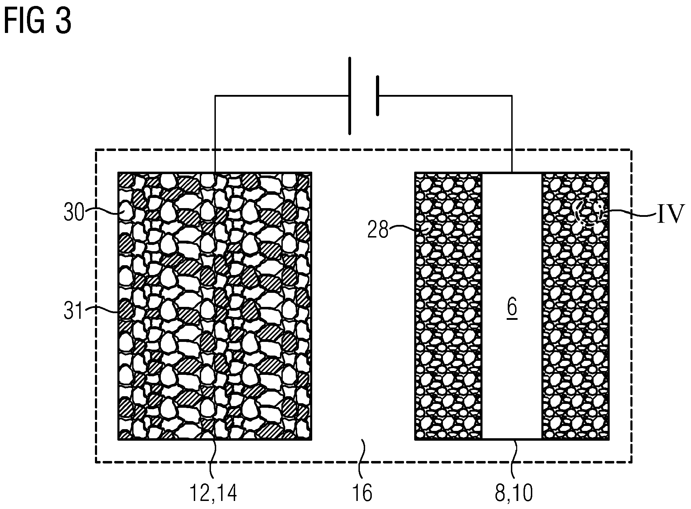

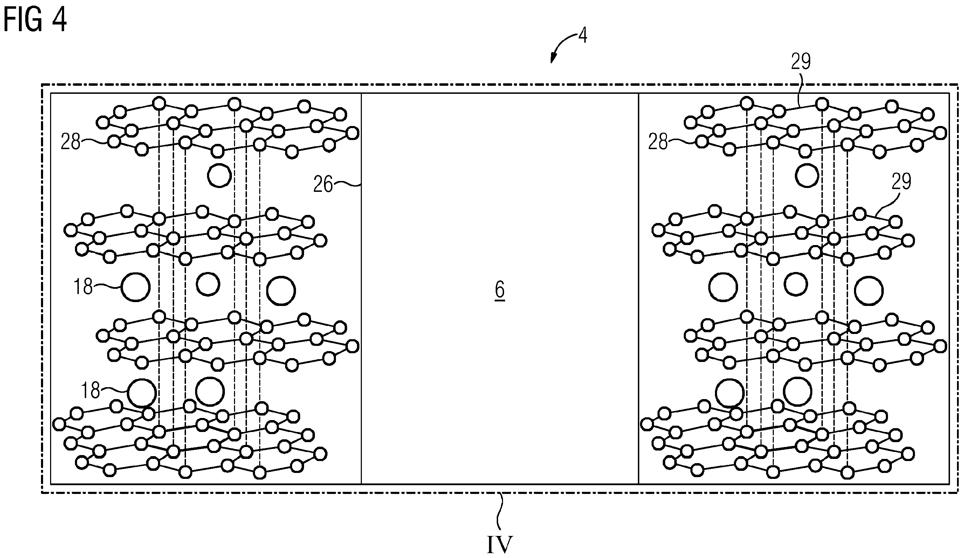

In Figur 2 ist eine analoge Ausgestaltung der elektrochemischen Zelle 2 aus Figur 1 gegeben, jedoch sind eine Vielzahl von Paaren an ersten Elektronen 8 und zweiten Elektronen 12, also Paare von Katoden 10 und Anoden 14 in dieser Zelle 2 parallelgeschaltet. Die Kontaktierung 46 sowie der Inertgas-Kreislauf 34 und das Elektrolyt-Umwälzsystem 38 sind analog zur Zelle 2 in Figur 1 ausgestaltet. Diese Ausgestaltung nach Figur 2 dient insbesondere dazu, ein Upscaling für die Aufbereitung von lithiumhaltigen Verbindungen und der Herstellung einer Elektrode 4 (vgl. Figur 3 und 4) zu erzielen. Im Weiteren wird auf den elektrochemischen Prozess und die vorbereitenden Abläufe zur Herstellung der Anode 14 und der Katode 10 für die elektrochemische Zelle 2 genauer eingegangen.

Da Lithium das niedrigste Normalpotenzial von -3,04 V im Periodensystem hat und somit das unedelste aller Elemente ist, können Elektrolyte, die H₃O⁺-Ionen dissoziieren, also hauptsächlich wässrige Elektrolyte für lithiumhaltige Zellen nicht verwendet werden. Bei einer elektrochemischen Abscheidung würde sonst eher der Wasserstoff als das Lithium abgeschieden werden. Das elektrochemische Fenster von Wasser beträgt 1,2 V. In diesem elektrochemischen Potenzial der Elektrode wird der Elektrolyt weder oxidiert noch reduziert. Dieser Bereich ergibt sich aus der Differenz von Oxidationspotenzial (anodische Grenze) und Reduktionspotenzial (katodische Grenze). Außerhalb dieses Bereiches reagiert der Elektrolyt an der Elektroden-Oberfläche. Wasser wird dabei elektrolysiert.

Anstelle von Wasser kommt für die Abscheidung von Lithium a-protische, polare Lösungsmittel, wie Ethylencarbonat, Propylencarbonat oder Dimethylcarbonat, Acetonitril oder ionische Flüssigkeiten zum Einsatz. Die organischen Carbonate und ionischen Flüssigkeiten haben ein größeres elektrochemisches Fenster. Bei Propylencarbonat liegt das elektrochemische Fenster bei 4 V und ionische Flüssigkeiten zeigen einen Wert von 3 V bis 6 V. Da das elektrochemische Fenster durch geringe Wassereinträge (ca. 3 Gew.%) von 4 V auf 2 V gesenkt wird, ist es notwendig, wasserfrei zu arbeiten. Außerdem reagiert Lithium schon bei Raumtemperatur mit Stickstoff zu Lithiumnitrid und mit Sauerstoff zu Lithiumoxid. Daher wird die elektrochemische Zelle 2 mit Inertgas 44, insbesondere Argon oder Schwefeldioxid gespült. Die Gasspülung der Zelle 2 erfolgt im Inertgas-Kreislauf 34, wobei das Inertgas 44 ständig zwischen der Zelle 2 und der Gasreinigungsanlage 36 umgewälzt und kontinuierlich aufbereitet wird. Das Gasreinigungssystem 36 entzieht dem Inertgas 44 Sauerstoff und Feuchtigkeit mittels eines Kupferkatalysators und eines Molekularsiebs. Dadurch werden Reinheitsgrade von bis zu < 1 ppm. O₂ und < 1 ppm H₂O erreicht.

Außerdem muss die elektrochemische Zelle 2 gegenüber der Umwelt abgeschlossen sein, damit keine Luftfeuchtigkeit sowie kein Sauerstoff oder Stickstoff in die Zelle 2 eintritt. Der Elektrolyt 16 wird zur Aufbereitung ebenfalls ständig über Filteranlagen 42 mittels einer Pumpe 40 gepumpt und in die abgeschlossene elektrochemische Zelle 2 zurückgeführt.

Zur Herstellung der zweiten Elektrode 12, also der Anode 14, wird eine Lithium-Schlacke, die bei der thermischen Zersetzung von alten, gebrauchten Lithium-Ionen-Akkus anfällt, eingesetzt. Daher weist diese zweite Elektrode 12 Lithiumverbindungen 30 auf, was beispielsweise in Figur 3 dargestellt ist. Diese Lithiumverbindungen 30, die auch als Lithiumschlacke bezeichnet werden können, weil sie eben aus den thermisch zersetzten Resten von Lithium-Akkumulatoren stammt, enthalten Lithium-Calcium-Silikate, Lithium-Magnesium-Silikate, Lithiumfluorid und/oder Lithiumaluminit. Bei der Zersetzung bestimmter NMC-Batterien, die Mangan enthalten, befindet sich je nach Mangan-Gehalt auch Lithium-Mangan-Oxid (Li₂Mn₂O₃ oder dazugehöriger Spinell-Typ LiMn₂O₄) in der Schlacke. Diese Lithium-Schlacke muss zunächst mechanisch aufbereitet werden, indem die Schlacke gebrochen und in einer Scheibenschwingmühle oder einer Kugelmühle zu Partikeln zermahlen wird. Anschließend wird das so gewonnene Pulver aus der Schlacke mit elektrisch leitfähigen Kohlenstoffpartikeln 31 (z. B. elektrisch leitfähiger Rus, poröses leitfähiges Kohlenstoffpulver oder Grafit) in einem Pflugscharmischer für Batteriemassen innig vermischt. Die Mischtrommel verfügt über eine keramische Auskleidung. Mischelemente, Mischerwelle und Messköpfe sind bevorzugt mit einem dünnen festen keramischen Überzug (z. b. Aluminiumoxid oder Wolframcarbid) versehen, sodass Fremdionen vermieden werden können. Im Pflugscharmischer wird in kurzer Zeit eine homogene Durchmischung erreicht. Poröse leitfähiges Kohlenstoffpulver in Form von Kohlenstoffpartikel 31, beispielweise unter dem Handelsnamen Porocarb erhältlich, ist besonders gut als Additiv für die Elektrodenformulierung geeignet, weil nach der Elektrodenverdichtung lokale Bereiche mit hoher Porosität vorhanden sind.

Die makroporösen Kohlenstoffpartikel 31 werden zur Verbesserung der ionischen Leitfähigkeit in der Elektrode 12 eingesetzt. Bei fortschreitender Anodendegradation wird durch den Anteil an Makroporen ein Kapazitätsverlust vermindert. Außerdem wird durch die Porosität der Partikel 31 die mechanische Stabilität der Elektrode 12 nach der Verdichtung erhöht. Das gemischte Pulver (Gemisch Lithiumverbindung 30 und Kohlenstoffpartikel 31) wird in eine Pressform gefüllt und in einem Pressvorgang verdichtet. Dabei kann es sich um ein uniaxiales Pressen mittels eines Oberstempels oder durch ein isostatisches Pressen bei ca. 300 bar in einem Ölbad handeln. Auf diese Weise wird eine bevorzugt zylindrische Elektrode geformt. Diese so hergestellte zweite Elektrode 12 wird in der Zelle 2 als Anode 14 eingebracht.

Die dazugehörige Katode 10 der elektrochemischen Zelle wird dabei bereits im vornherein so aufgebaut, dass sie während des Prozesses in der elektrochemischen Zelle 2 zu einer Elektrode 4 eines Lithium-Akkumulators umgewandelt wird. Das heißt die Katode 10 in der Zelle wird während des Zellenbetriebs so verändert, dass sie am Ende des Verfahrens als neue eigenständige, lithiumhaltige Elektrode 4 (vgl. Figur 4) erscheint. Diese positive Elektrode eines Lithium-Akkus, also die Elektrode 4 besteht aus einem Stromkollektor, der eine Metallfolie 6 und einer Energiespeichernennschicht. Bei dieser Schicht handelt es sich um die Grafit-Schicht 28 mit den darin interkalatierten Lithiumionen.

Zur Herstellung der ersten Elektrode 8 wird bevorzugt synthetisch produziertes Grafit verwendet. Synthetisches Grafit zeichnet sich gegenüber dem Naturgrafit durch höhere Reinheit, bessere Qualität und durch Reproduzierbarkeit angepasster Eigenschaften aus. Dies führt zu einer höheren Zyklen-Stabilität zwischen Lade- und Entladevorgängen und zu einer besseren Performance beim Laden im Allgemeinen. Das synthetische Grafit wird mit einem Bindemittel (z.B. Polyacrylsäure (PAA), acrylbasierte Copolymere (ACM), Styrene- Butadiene Rubber (SPR), Carboxymethyl-Cellulose, die in Wasser oder Ethanol löslich sind) und einem Leitadditiv (beispielsweise Ruß) auf eine Kupferfolie (Metallfolie 6) aufgetragen. Direkt nach der nasschemischen Applikation eines Elektrodenslurries erfolgt eine Trocknung in einem Prallstrahltrockner, um das verwendete Lösungsmittel (beispielsweise Ethanol oder Wasser) zu entfernen. In dem Prallstrahltrockner wird der Slurryfilm mit der Kupferfolie in der Schwebe gehalten und im Durchlauf über Luftstrahlen, die mit hoher Geschwindigkeit durch eine Düse auf die zu trocknende Bahn aufprallen und dabei einen hohen Wärme- und Stoffübergang bewirken, getrocknet. Anschließend
erfolgt noch eine Nachtrocknung in einem Vakuumofen, um die Restfeuchte von Wasser auf wenige ppm zu reduzieren.

Bei der Kupferfolie handelt es sich um elektrolytisch gereinigtes Kupfer, das zu einer Folie gezogen wird. Das derart gereinigte Kupferweist weist mit > 99,99 % einen sehr hohen Reinheitsgrad auf.

In Figur 3 ist sehr schematisch eine Mikrostruktur der jeweiligen Elektroden 12, 8 in der Zelle 2 dargestellt. Auf der linken Seite ist die Anode 14 in Form der zweiten Elektrode 12 dargestellt. Diese umfasst, wie bereits beschrieben, die lithiumhaltigen Verbindung 30, also die aufbereitete Lithium-schlacke mit den genannten Lithium-Verbindungen. Zudem ist die Struktur mit leitfähigen Kohlenstoffpartikel 31 versehen und zu einer Elektrode 12 verdichtet. Auf der rechten Seite der Figur 3 ist die Katode 10 dargestellt. Hierbei handelt es sich um die Metallfolie 6, in diesem Fall um eine Kupferfolie, die mit der Grafit-Schicht 28 versehen ist, in die sich während des Betriebs der Zelle 2 die Lithiumionen 18 einlagern.

In Figur 4 ist die schematische Mikrostruktur der daraus entstandene Elektrode 4 dargestellt, die dem Ausschnitt IV aus Figur 3 vergrößert darstellt. Diese Elektrode 4 ist somit mit der Grafit-Schicht 28 versehen, wobei zwischen die einzelnen Graphen-Schichten 29 der Grafit-Schicht 28 die Lithiumionen 18 eingelagert sind. Grundsätzlich kann diese Elektrode 4 gemäß Figur 4 dazu verwendet werden, in einen neuen Lithium- - Akkumulator zum Beispiel als Anode eingesetzt zu werden.

In dem beschriebenen Verfahren zur Herstellung dieser Elektrode 4 wird somit recycliertes lithiumhaltiges Material eingesetzt, um direkt eine neue gebrauchsfertige Elektrode 4 für einen neuen Akkumulator zu erzeugen.

### Bezugszeichenliste

- 2: elektrochemische Zelle
- 4: lithiumhaltige Elektrode
- 6: Metallfolie
- 8: erste Elektrode
- 10: Kathode
- 12: zweite Elektrode
- 14: Anode
- 16: nichtwässriger Elektrolyt
- 18: Lithiumionen
- 26: Oberfläche Metallfolie
- 28: Grafit-Schicht
- 29: Graphen-Schichten
- 30: Lithiumverbindungen
- 31: Kohlestoffpartikel
- 34: Inertgaskreislauf
- 36: Gasreinigungssystem
- 38: Elektrolytumwälzsystem
- 40: Pumpe
- 42: Filter
- 44: Inertgas
- 46: Kontaktierung

## Patentansprüche

1. Verfahren zur Herstellung einer lithiumhaltigen Elektrode (4) für einen Lithium-Ionen haltigen Akkumulator umfassend folgende Schritte:
- Herstellen einer Metallfolie (6),
- Beschichten einer Oberfläche (26) der Metallfolie (6) mit einer Grafit-Schicht (28),
- Einbringen der mit der Grafit-Schicht (28) versehenen Metallfolie (6) in eine elektrochemischen Zelle (2) als erste Elektrode (8) die als Kathode (10) dient,
- Einbringen einer zweiten, lithiumhaltigen Elektrode (12) in die Zelle (2), die als Anode (14) dient,
- wobei in die zweite lithiumhaltige Elektrode (12) Lithiumverbindungen (30) eingebracht werden, die aus zersetzten Elektrodenmaterial eines Lithium-Ionen Akkumulators stammen,
- Einbringen eines nichtwässrigen Elektrolyten (16) in die elektrochemische Zelle (2),
- Verschließen der elektrochemischen Zelle (2) unter inerten Bedingungen,
- Anlegen von elektrischem Strom an die Elektroden (8), (12) der elektrochemischen Zelle (2), so dass Lithiumionen (18) von der lithiumhaltigen Anode (14) durch den nicht wässrigen Elektrolyten (16) zur Kathode (10) in Form der mit der Grafit-Schicht (28) versehenen Metallfolie (6) wandern und
- die mit der Grafit-Schicht (28) versehene Oberfläche (26) der Metallfolie (6) zu Lithiumionen interkaliert wird.

2. Verfahren nach Anspruch 1, **dadurch gekennzeichnet, dass** die Metallfolie (6) eine Kupferfolie ist.

3. Verfahren nach Anspruch 2, **dadurch gekennzeichnet, dass** zur Herstellung der Kupferfolie elektrolytisch gereinigtes Kupfer verwendet wird.

4. Verfahren nach Anspruch 3, **dadurch gekennzeichnet, dass** das Kupfer eine Reinheit von mindestens 99,9%, bevorzugt von 99,99 % aufweist.

5. Verfahren nach einem der vorhergehenden Ansprüche, **dadurch gekennzeichnet, dass** das Grafit ein synthetisch hergestelltes Grafit ist.

6. Verfahren nach einem der vorhergehenden Ansprüche, **dadurch gekennzeichnet, dass** das Grafit mit einem Bindemittel versehen wird und auf die Metallfolie (6) aufgetragen wird.

7. Verfahren nach Anspruch 6, **dadurch gekennzeichnet, dass** das Bindemittel Polyacrylsäure (PAA), acrylbasierte Copolymere (ACM), Styrene- Butadiene Rubber (SPR) und/oder Carboxymethyl-Cellulose umfasst.

8. Verfahren nach einem der Ansprüche 6 oder 7, **dadurch gekennzeichnet, dass** die eine Mischung aus Grafit und dem Bindemittel zur Herstellung der Grafit-Schicht (28) mit einem Leitadditiv, insbesondere mit Ruß versehen wird.

9. Verfahren nach einem der vorhergehenden Ansprüche, **dadurch gekennzeichnet, dass** Lithiumverbindungen (30) aus thermisch zersetzten Elektrodenmaterial eines Lithium-Ionen Akkumulators stammen.

10. Verfahren nach einem der vorhergehenden Ansprüche, **dadurch gekennzeichnet, dass** der nicht wässrige Elektrolyt (16) Ethylen-, Propylen- oder Dimethylcarbonat, Acetonitril oder eine ionische Flüssigkeit umfasst.

11. Verfahren nach einem der vorhergehenden Ansprüche, **dadurch gekennzeichnet, dass** die Lithiumverbindung (30) Lithium-Calcium-Silikate und/oder Lithium-Magnesium-Silikate und/oder Lithium-Mangan-Oxide und/oder Lithium-Cobalt-Oxide und/oder Lithium-Nickel-Oxide umfasst.

12. Verfahren nach einem der vorhergehenden Ansprüche, **dadurch gekennzeichnet, dass** die inerten Bedingungen durch Argon als Schutzgas bereitgestellt werden.

13. Elektrochemische Zelle zur Herstellung einer Elektrode eines Lithium-Akkumulators umfassend eine Anode (14) mit Lithiumverbindungen (30), die aus einer Zersetzung von gebrauchten Lithium-Akkumulatoren stammen und einer Kathode (10), die eine Metallfolie (6) umfasst, die auf ihrer Oberfläche (26) mit einer Grafit-Schicht (28) versehen ist und wobei die Anode (14) und die Kathode (10) durch einen nicht wässrigen Elektrolyten (16) voneinander getrennt sind.

14. Elektrochemische Zelle nach Anspruch 13, **dadurch gekennzeichnet, dass** in der elektrochemischen Zelle (2) mehrere Paare von parallelgeschalten Anoden (14) und Kathoden (10) vorliegen.

15. Elektrochemische Zelle nach Anspruch 13 oder 14, **dadurch gekennzeichnet, dass** die Lithiumverbindungen (30) mit Kohlstoffpartikel (32), bevorzugt mit porösen Kohlenstoffpartikel (32) vermischt sind.
